# EUROPEAN PATENT SPECIFICATION

(11) **EP 4 544 516 B1**
(45) Date of publication and mention of the grant of the patent: **09.09.2026**
(21) Application number: 23732098.1
(22) Date of filing: 12.06.2023
(51) Int. Cl.: G06V 20/10

(54) **METHOD AND SYSTEM FOR PATTERN DETECTION IN AGRICULTURAL FIELDS**
VERFAHREN UND SYSTEM ZUR MUSTERERKENNUNG IN LANDWIRTSCHAFTLICHEN FELDERN
PROCÉDÉ ET SYSTÈME DE DÉTECTION DE MOTIF DANS DES CHAMPS AGRICOLES

(30) Priority: 23.06.2022 EP 22180679
(43) Date of publication of application: 30.04.2025
(73) Proprietor: Yara International ASA, 0277 Oslo (NO)
(72) Inventor: RATHEE, Geetika, 10961 Berlin (DE); SIELENKEMPER, Marvin, 48249 DUELMEN (DE)
(74) Representative: AWA Sweden AB
(86) International application number: PCT/EP2023/065572
(87) International publication number: WO 2023/247229

(56) References cited:
- US-A1- 2022 044 411
- US-A1- 2022 183 208
- US-B2- 9 058 633

## Description

### Technical Field

The present disclosure relates to the determination of patterns in agricultural fields by means of remote imagery. The present disclosure further relates as well to a compensation method for filtering out the noise which said patterns cause for the determination of agronomic properties by means of remote sensing.

### Background

The use of remote imagery for the determination of agronomic properties is widely accepted due to the great availability and low cost. Different technologies like synthetic aperture radar (SAR) and multi-spectral instrument (MSI) approaches are already used, with the respective advantages and disadvantages the methods entail (i.e., spatial and temporal resolution, cloud susceptibility).

Tools for decision support based on these approaches help the farmers in determining water and fertilization needs of crops as well as determining pests and other information of interest for the farmers in order to better manage their fields. In view of the latest developments with rising energy and fertilizer prices, environmental challenges and regulations, reducing the amount of crop nutrition and production products while increasing the use efficiency and reducing the carbon footprint is of great importance.

Following the improvement of the spatial, spectral and temporal resolution of satellite imagery, different patterns and artifacts may appear on satellite imagery which interfere with the above-mentioned goals and there is a need for determining these patterns and their nature, establishing different approaches for improving the quality of information provided by remote imagery. The increasing resolution of remote imagery, besides the increasing computational requirements, has caused the appearance of until now unobserved patterns and other artifacts which affect the signal quality and its evaluation for the determination of agricultural decision-making support tools.

While image processing methods (filtering, thresholding) have been used for specific feature detection (man-made buildings, artificial constructions, boundary detection), agricultural fields usually add a further level of challenges due to the non-stationary characteristics of crops, which, as compared to buildings and other man-made structures, increases the complexity of the analysis since crops grow and change appearances from day to day and within the same day. Other AI-based or machine learning approaches have been used in the field, these however usually require a big computational effort have bias problems. Hence, an approach which reliably detects patterns in agricultural enabling the improvement of the decision support offered to farmers is needed.

### Prior Art

Different approaches by means of remote sensing for planning agricultural measures are known. For example, US20190246549A1 discloses the use of satellite digital imagery for planning partial-area-specific agricultural measures by analyzing in-field variability to adapt the crop nutrition or protection product application.

Document US10467474 discloses the use of Coherent Change Detection (CCD) imagery, determining radial derivatives by means of Radon transform. However, these approaches are not transferrable to agricultural uses due to the stationary and changing patterns present in agricultural fields. Coherent Change Detection uses the sudden appearance of patterns in order to detect scene changes. However, in agricultural fields, the growth of plants and the inherent noise present in crops reduce the effectivity of such an approach. Document US 2022/044411 A1 (Sneyders Yuri et al.) discloses computer-implemented techniques for automated analysis of video streams, including the definition and execution of configurable rules for detecting events or behaviors within monitored environments. Document US 9,058,633 B2 (Lindores Robert J et al.) describes systems and methods for processing visual data to identify and track objects or activities, typically within surveillance or monitoring contexts.

It is hence needed to achieve a remote based solution which addresses the needs of remote imagery for agricultural purposes, wherein pattern detection and compensation can be made reliably.

### Summary

The current disclosure aims at providing solutions for the problems which the use of such remote imagery entail and to provide and improved method which allows the user to determine patterns in agricultural fields and provide an improved management of the agricultural field as well as give further uses to the gained information.

The invention is defined by the appended claims.

According to a first aspect of the present disclosure, this and other objectives are achieved by a computer-implemented method for detecting patterns in agricultural fields, wherein the patterns comprise pattern elements, which are repeated periodically on one direction and gaps between the pattern elements which define a pattern geometry and the method comprises receiving remote image data of an agricultural field comprising a plurality of pixels, wherein each pixel comprises at least one pixel value, wherein the at least one pixel value, respectively, is representative of the reflectance of at least one wavelength band; processing the pixel values for at least a subset of contiguous pixels in the received remote image data; wherein processing the pixel value for at least a subset of contiguous pixels comprises applying a Fourier Transform to the pixel values of the subset of contiguous pixels; processing the Fourier Transform output data to determine an offset value, wherein the offset value represents the distance of the center of a pixel to a nearest pattern element, the method further comprising generating a mask function, wherein the mask function comprises set values for the processed pixels, wherein the set values are determined based on the offset value of the processed pixels and determining the pixels containing pattern elements based on the mask function.

Following this approach, patterns present in the agricultural field can be determined with sub-pixel level precision and depending on their nature, different advisory actions can be carried out.

According to a second aspect of the present disclosure, the method further comprises the Fourier Transform outputting a two-dimensional array of complex values, determining the index of the maximal magnitude value of the two-dimensional array and designating the complex values with maximal magnitude value as spectral peaks in the frequency domain; based on the amplitude, phase and frequencies of the spectral peaks in the frequency domain, determining a direction vector indicative of the direction of the pattern elements, wherein the direction vector is given by the argument of the peak index regarded as complex frequency; determining a step vector, defined as a normal vector to the direction vector, wherein the modulus is defined by the frequency of the determined pattern and determining the offset value based on the argument of the peak value in relation to the pattern frequency.

Following this approach, the most dominant pattern present in the agricultural field can be determined.

According to a third aspect of the present disclosure, processing the pixel value for the at least a subset of contiguous pixels in the received remote image comprises applying a window function prior to the application of the Fourier Transform centered in the at least a subset of contiguous pixels in the received remote image data, hereby adjusting the pixel values, wherein the window width of the window function is chosen according to a predetermined parameter.

Following this approach, the computational effort is reduced and patterns of different frequencies can be accounted for.

According to a fourth aspect of the present disclosure, the method further comprises the window function being a Gaussian Window, the method further comprising interpolating the complex values of the two-dimensional array adjacent to the maximal magnitude value of the two-dimensional array of elements with a parabolic function, and determining the maximum value of the interpolating parabolic function, wherein the offset value is adjusted based on the maximum value of the interpolating parabolic function.

Following this approach, the detection precision is increased.

According to a further aspect of the present disclosure, processing the Fourier Transform outputs further comprises applying a mask to the Fourier Transform output data, wherein the mask is configured to remove the complex values outside a predetermined frequency range.

Following this approach, specific expected frequencies can be scanned and singled out.

According to a further aspect of the present disclosure, the method further comprises adjusting the pixel values for the pixels containing a pattern element.

Following this approach, the specific pixel values of the at least one wavelength band can be adjusted and the pattern induced noise removed.

According to a further aspect of the present disclosure, adjusting the pixel values comprises determining a correction value based on the respective pixel values of neighboring pixels to pixels comprising a pattern element and determining an adjusted pixel value based on the correction value.

Following this approach, a consistent value of the adjusted individual pixel values is achieved.

According to a further aspect of the present disclosure, determining a correction value based on the respective pixel values of neighboring pixels to pixels comprising a pattern element further comprises excluding neighboring pixels comprising a pattern element.

Following this approach, the adjustment of the adjusted individual pixel values is improved.

According to a further aspect of the present disclosure, receiving remote image data of an agricultural field further comprises the pixel values being representative of the reflectance or emittance of a plurality of wavelengths, wherein the method further comprises determining a vegetation index based on the pixel values from the plurality of wavelengths; adjusting the vegetation index for the pixels containing a pattern element and determining a soil or crop status value of the agricultural field based on the adjusted vegetation index.

Following this approach, the noise introduced by patterns present in the field can be accounted for and an improved vegetation index is determined such that the determined soil or crop status value is not affected by the pattern induced noise removed. It should be noted that this also could be an independent aspect of the present invention.

As such, according to an independent aspect of the present disclosure, the method of the current disclosure may comprise receiving remote image data of an agricultural field comprising a plurality of pixels, wherein each pixel comprises at least one pixel value, wherein the at least one pixel value is representative of the reflectance or emittance of at least one wavelength band, the method further comprising receiving data of the pixels containing a pattern element and adjusting the pixel values of the received remote image data. Alternatively, receiving remote image data of an agricultural field further comprises the pixel values being representative of the reflectance or emittance of a plurality of wavelengths, wherein the method further comprises determining a vegetation index based on the pixel values of the plurality of wavelengths; adjusting the vegetation index for the pixels containing a pattern element; determining a soil or crop status value of the agricultural field based on the adjusted vegetation index.

According to a further aspect of the present disclosure, adjusting the vegetation index comprises determining a correction value based on the respective vegetation index of neighboring pixels to pixels comprising a pattern element and determining an adjusted vegetation index based on the correction value.

Following this approach, a consistent value of the adjusted vegetation index is achieved.

According to a further aspect of the present disclosure, determining a correction value based on the respective vegetation index of neighboring pixels to pixels comprising a pattern element further comprises excluding neighboring pixels comprising a pattern element.

Following this approach, the adjustment of the vegetation index is improved.

According to a further aspect of the present disclosure, the method further comprises refining the received remote image data to a predefined resolution, wherein the predefined resolution is finer than the original resolution of the received remote image data and the pixel values of the refined remote image data are determined based on the values of the coarser pixels of the remote image data; determining the offset value for the refined pixels of the remote image data; wherein the mask function is a refined mask function generated based on said predefined resolution, wherein the set values of the refined mask function are determined based on the offset value of the refined pixels of the remote image data; - wherein the refined pixels of the remote image data comprising a pattern element are determined based on the refined mask function and wherein the vegetation index is adjusted for the refined pixels comprising a pattern element.

Following this example, an increased resolution of the adjusted vegetation index is achieved.

According to a further aspect of the present disclosure, adjusting the vegetation index comprises at least one of: adjusting the vegetation index at the original resolution of the received further image data; adjusting the vegetation index at the predefined resolution; and adjusting the vegetation index at the original resolution and at the predefined resolution.

Following this example, different levels of refinement in the adjusted vegetation index are achieved.

According to a further aspect of the present disclosure, the method further comprises determining an agricultural practice based on the determined soil or crop status value.

Following this example, the crop can be appropriately treated while neglecting the influence patterns might have caused in the remote image data.

According to a further aspect of the present disclosure, the method further comprises the agricultural practice being at least one of: applying a fertilizer, applying a fertigation product, applying a pesticide product, and irrigation.

According to a further aspect of the present disclosure, the set values being determined based on the offset value of the processed pixels comprises comparing the offset value of the processed pixel to a predetermined value.

According to a further aspect of the present disclosure, comparing the offset value of the processed pixel to a predetermined value comprises adjusting the predetermined value based on farm and/or field data.

According to a further aspect of the present disclosure, comparing the offset value of the processed pixel to a predetermined value further comprises determining a pixel orientation and adjusting the predetermined value based on the orientation of the processed pixel and at least one of the direction vector and the step vector.

According to a further aspect of the present disclosure, detecting patterns may comprise at least one of detecting vehicle tracks of agricultural machines and detecting row crops.

According to a further aspect of the present disclosure, the method further comprises determining a Moiré pattern correction based on the detected pattern for the pixel containing pattern elements.

According to further aspects, a system, a data processing apparatus, a computer-readable storage medium, and a computer program product configured to carry out the above discussed methods are envisaged within the present disclosure.

### Brief Description of the Drawings

The accompanying drawings, which are included to provide a further understanding of the present disclosure and are incorporated in and constitute a part of this specification, illustrate embodiments of the disclosure and together with the description serve to explain the principles of the disclosure.
Figures 1a and 1b show the value of a vegetation index in an agricultural field at different resolutions.
Figure 2 shows the analytic representation of the pattern characteristics.
Figure 3 shows the application of a mask on the frequency space after the application of Fourier Transform.
Figures 4a and 4b show the value of a vegetation index for an agricultural field before and after adjusting the values for the pixels comprising patterns.
Figure 5 shows different artifacts generated due to the Moiré effect.

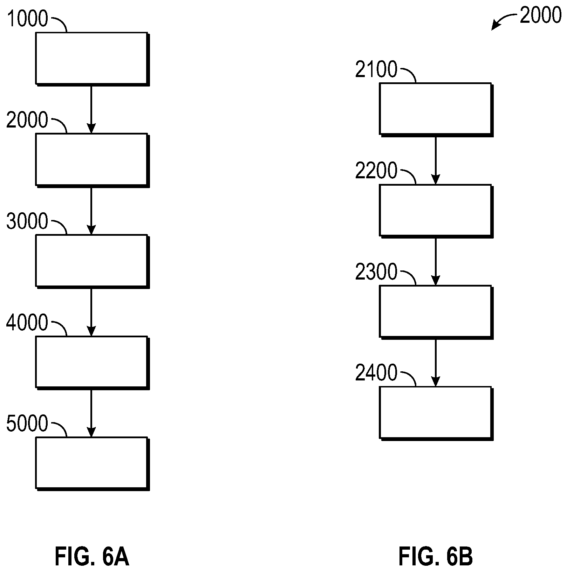

Figure 6a and 6b show workflows of different embodiments of the current disclosure.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

### Detailed Description

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints

The term "about" or "approximately" as used herein when referring to a measurable value such as a parameter, an amount, a temporal duration, and the like, is meant to encompass variations of +/-10% or less, specifically +/-5% or less, more specifically +/-1% or less, and still more specifically +/-0.1% or less of and from the specified value, insofar such variations are appropriate to perform in the disclosed application. It is to be understood that the value to which the modifier "about" or "approximately" refers is itself also specifically disclosed.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the application, including technical and scientific terms, have the meaning as commonly understood by one of ordinary skill in the art to which this application belongs. By means of further guidance, term definitions are included to better appreciate the teaching of the present application.

In the following passages, different aspects of the application are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present application. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the application, and form different embodiments, as would be understood by those in the art. For example, in the appended claims, any of the claimed embodiments can be used in any combination.

In the present description of the application, reference is made to the accompanying drawings that form a part hereof, and in which are shown by way of illustration only of specific embodiments in which the application may be practiced. Parenthesized or emboldened reference numerals affixed to respective elements merely exemplify the elements by way of example, with which it is not intended to limit the respective elements. It is to be understood that other embodiments may be used and structural or logical changes may be made without departing from the scope of the present application. The following detailed description, therefore, is not to be taken in a limiting sense, and the scope of the present application is defined by the appended claims.

In the present disclosure, the term "system" generally refers to any electronic data processing device, comprising a processor and a memory unit and the commonly known features of a computing device for efficiently processing data. The system can therefore represent any kind of computer architecture (desktop or laptop computers and mobile electronic data processing devices, as well as any server architecture) which is configured to carry out the method of the current application. Further, the system of the current disclosure may comprise usual input/output units for providing the user with an interface through which the user can provide data and receive information about the specific outputs of the process. Moreover, the system of the current disclosure may further comprise a communication unit for operatively connect the system with any data processing system or databases referred to in the present disclosure, as well as the machinery present in the agricultural field which may carry out the agricultural practices based on the method of the present disclosure.

In the present disclosure, the term "crop" generally refers herein to any plant grown to be harvested or used for any economic purpose. Within the crop types, some are considered "row crops" when fields are organized in rows. "Broadacre crops" may refer to extensively grown crops like cereals or other crops for human or animal consumption (e.g. grasslands for animal consumption), wherein cereals may refer to any kind of crop like wheat, barley, oats, rye, triticale, rice, millet grown uniformly or substantially uniformly over the whole or at least a part of agricultural field). The importance of cereals in the global food chain can be highlighted, since more than 50% of the crops worldwide are cereals (FAO - World and Agriculture - Statistical Yearbook 2021) but the importance of row crops due to the high value crops produced (fruit and nuts, e.g.) needs to be highlighted as well.

In the present disclosure, the term "pattern" generally refers herein to any line or element of a repeated nature present in remote imagery which may be created due to human interaction, because of natural phenomena or due to artefacts arisen during the remote observations or during the processing of these observations. Hence, patterns are defined to comprise pattern elements, which are repeated periodically on one direction and the gaps between these elements which define the pattern geometry. In agricultural fields, vehicle tracks left behind by agricultural machinery are of special importance and considered to be within the scope of the current disclosure and have special properties which allow a more efficient determination, but the current disclosure is not only limited to these. For example, shadows caused by electrical/telephone posts on fields can as well cause these patterns of a repetitive nature. These patterns and other patterns present in the crop may as well be transformed during processing in other artificial patterns which disturb the measurements derived from remote image data due to aliasing or moiré effects caused by digital processing. While farmers may access GPS machinery data in order to determine where the machinery has been active on the field, this data is not always available due to the lack of GPS sensors in older machinery and additionally may not be available to agriculture technology service provider despite its existence. Moreover, GPS accuracy is not in the needed range for determining the exact location of the tracks on the field. Due to the mentioned already present increase and the future developments envisaged improving the resolution of remote image data, more patterns of different frequencies are expected to arise. Since the general teachings of the Nyquist-Shannon sampling theorem state that if a function *x(t)* contains no frequencies higher than B 1/m, it is completely determined by giving its ordinates at a series of points spaced 1/2B m apart, the method of the current disclosure is configured to determine frequencies of up to two times the resolution of the given remote image data (i.e. remote image data of with a resolution of 20m allows to detect patterns happening at least each 40m).

In the present disclosure, "field data" may include: identification data (for example, acreage, field name, field identifiers, geographic and topographic identifiers, boundary identifiers, crop identifiers, and any other suitable data that may be used to identify farm land), soil data (for example, type, composition, pH, organic matter (OM), cation exchange capacity (CEC)), planting data (for example, planting date, seed(s) type, relative maturity (RM) of planted seed(s), seed population), harvest data (crop type, crop variety, crop rotation, tillage practice, and previous growing season information), fertilizer data (for example, nutrient type: i.e. Nitrogen, Phosphorous, Potassium,... , application type, application date, amount, source), pesticide data (for example, pesticide, herbicide, fungicide, other substance or mixture of substances intended for use as a plant regulator, defoliant, or desiccant) and/or irrigation data (for example, application date, amount, source) of present and past seasons.

In the present disclosure, "farm data" may comprise data regarding to farm equipment and administrative data like used machinery type and data like their associated GPS data, planned or scheduled or past tasks like field maintenance or agricultural practices, crop protection or nutrition products application date and data, irrigation data as well as historic series of the data from the administrative side. Amongst usual data related to this are, for example, managing stocks, manpower, available or utilized machinery or machinery rental requests and further administrative data like work shifts, logs and other organizational data.

In the present disclosure, "receiving remote image data" may comprise receiving any kind of imagery of the agricultural field obtained by means of cameras, image capturing devices or optical sensing devices. The system of the current disclosure is therefore configured to receive remote image data by means of a suitable communication unit, which may be configured to receive or download the data from public or private repositories. Receiving remote image data may further comprise directly receiving the image data from remote imagery systems by means of usual wireless transmissions via the communication unit. These devices may be dedicated sensors from satellites or other aerial vehicles, whether manned or unmanned, which amount to cover at least a partiality or the totality of the agricultural field to be researched. While the use of satellite imagery can be of direct application, imagery obtained by aerial vehicles or drones, wherein further processing may be needed to collate the different images collected, falls as well within the disclosure of the present disclosure.

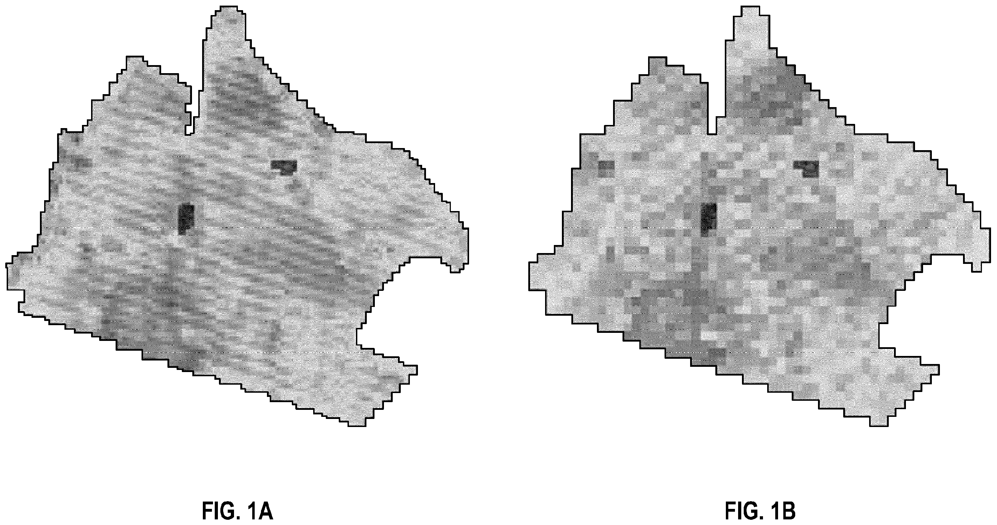

The image data may refer to broadband optical data from a plurality of wavelengths or be related to a single wavelength. Non-limiting examples of remote imagery sensing devices include synthetic aperture (SA) and synthetic aperture radar (SAR), multi-spectral instrument (MSI) or any similar digital imagery (RGB, HSV,...). Moreover, image data may comprise a plurality or a combination of wavelengths, for example in the form of a determined vegetation index. While some technologies might require further processing like smoothing or the application of filters, the method of the current disclosure is configured to handle images of different resolutions and standards. Hereby, reducing the amount of computational effort, every image data may be converted into a gray scale. Amongst the different remote image data available for use, different public platforms like LANDSAT, SENTINEL-1, SENTINEL-2 and/or private providers are widely available to the public. It is to be noted that the resolution of the different satellite and other platforms may vary greatly. For example, Sentinel-2 carries a Multi-Spectral Imager, delivering 13 spectral bands ranging from 10 to 60-meter pixel size. Its blue (B2), green (B3), red (B4), and near-infrared (B8) channels have a 10-meter resolution. Next, its red edge (B5), near-infrared NIR (B6, B7 and B8A) and short-wave infrared SWIR (B11 and B12) have a ground sampling distance of 20 meters. Sentinel-1 Satellites are SAR based satellites providing a spatial resolution of down to 5m. While the current method is independent of the used resolution, inherent advantages to the method may provide further advantages using the most convenient resolutions for different steps. As it can be seen in Figure 1, depending on the resolution of the image, different patterns may occur which pose a challenge for the determination of agricultural information from the image. Figure 1a image displays the value of a vegetation index or coefficient at a resolution of 10m. In this image, patterns present in the field are observable despite the resolution not being high enough for a clear representation of them. Figure 1b displays another vegetation index or coefficient at a resolution of 20m. While the pattern is now not recognizable, the current image still carries as well the information in the coarser pixels, creating a distortion of the respective values of the vegetation indexes or coefficient for each pixel at the coarser resolution as well. Moreover, further artifacts or patterns may arise in the image due to the imagery satellite specifics, like resolution, viewing angle and orientation amongst others. As such, the information contained in these patterns gets propagated in coarser pixel grids and modify the determined vegetation indexes or coefficients, hereby biasing any crop health or nutrient status determination.

While not explicitly discussed in the current disclosure, remote image data may be pre-processed following standard procedures like normalization, removal of clouds, smoothing and the like which are comprised within the usual practices in the field and included within the scope of the present disclosure.

In the present disclosure, "a vegetation index" or "coefficient indicative of a crop and/or soil status" refers to any coefficient or index indicative of agricultural (relative to nutrient, health or moisture indicators of the crops), soil and/or vegetation information. For example, several indexes which have been used widely are the normalized difference vegetation index (NDVI), the soil-adjusted vegetation index (SAVI), the Soil Water Index (SWI) and/or the Bare Soil Index (BSI), wherein the present disclosure is not limited to a specific index or coefficient. It is however to be mentioned than based on the specifics of the individual indexes or coefficients, further advantages of the current disclosure will be made clear. These coefficients or vegetation indexes are usually defined with specific mathematical relations between a plurality of reflectance values from different bands of specific wavelengths. As mentioned above, each band or wavelength may have its own pixel size or resolution, which can be advantageously used by the method of the current disclosure.

In the present disclosure, "processing" refers to any mathematical or data transformation operation which is carried out by a processing unit of the system of the current disclosure to evaluate different properties of the processed data. Amongst the different processing tools, general mathematical functions are included as well as mask and window functions as described here below.

In the present disclosure, "window, windowing or window function" refers to the application of window or apodization functions to the image data or to a specific sub-area of the image data, the sub-area of the image data comprising a plurality of contiguous pixels. Different apodization functions are envisaged within the current disclosure. For example, Hann and Hamming windows, Gaussian. While the specificities of each apodization function are unique to each type of window, apodization functions are usually non-negative, smooth, bell-shaped curves within a specific interval, and usually identically zero outside the interval, although a more general definition of apodization functions does not require them to be identically zero outside an interval, as long as the product of the apodization multiplied by its argument is square integrable and the function goes sufficiently rapidly toward zero. Applying apodization functions is a mathematical preconditioning of the signal which improves the output of the Fourier transformation.

In the present disclosure, "masking" or a "mask function" refers to the application of data processing tools for the selection of specific pixels within an image, portions of an analog signal or bits within a digital signal. By masking, the information outside a specific area or portion of an information carrying signal is selected or occluded or eliminated in order to center the processing to a specific region of interest. Within the current application, both masking image data or bits within a digital signal can be seen to take place. Due to the duality of image data represented as any two-dimensional array of data, masking within the current disclosure may refer to any data processing tools which select or occludes a subset of elements from the two-dimensional array of data or any image processing tools which selects or occludes specific subsets of pixels. In the present disclosure, mask functions may take "set values" in order to determine if a specific pixel of an image or portion of a signal is selected or not (e.g. 0 to denote that the pixel or portion of the image is blocked or not fulfilling the selection criteria, 1 if the pixel or portion is selected as fulfilling the selection criteria). Hence, the mask function may determine the respective set values to be 0 or 1 in order to denote the image pixel or signal portion which fulfills the intended selection.

The method of the current disclosure comprises receiving 1000 remote image data of an agricultural field comprising a plurality of pixels, wherein each pixel comprises at least one pixel value, the at least one pixel value, respectively, being representative of the reflectance or emittance of at least one wavelength band. The method further comprises processing 2000 the pixel values for at least a subset of contiguous pixels. While the method of the current disclosure may be applied to the whole agricultural field upon conditioning, it might be done as well simultaneously or iteratively by subsets of contiguous pixels to reduce computational effort. Moreover, it is usual to exclude the boundary regions of imagery data of agricultural field due to the irregularities which arise at these boundaries due to the pixelized nature of the images. Within the present disclosure, processing 2000 the pixels values for at least a subset of contiguous pixels in the received remote image further comprises applying 2200 a Fourier Transform to the pixel values of the subset of contiguous pixels within the image of the agricultural field and processing the Fourier Transform outputs to determine 2400 an offset value 100, wherein the offset value represents the distance of the center of a pixel to the nearest pattern element. The method further comprises generating 3000 a mask function, wherein the mask function comprises set values for the processed pixels, wherein the set values are determined based on the offset value of the processed pixels and the method further comprises determining 4000 the pixels containing the pattern elements based on the mask function.

In a further embodiment, the set values being determined based on the offset value of the processed pixels may comprise comparing the offset value of the processed pixel to a predetermined value. For example, if the offset value of a pixel is 0, this means that the pixel is centered on the pattern element and the pixel therefore contains an element and therefore the mask function set values will be 1. Dependent on the pixel size and other factors like the frequency of the determined patterns and their orientation, the predetermined value which denotes if a pixel contains a pattern element may vary. If the offset value is bigger than half the pixel size (e.g. the width or the diagonal dimension), it is determined that the pixel does not comprise the pattern element and therefore the mask function set value is 0.

In further embodiments, the approach may be refined by adapting the predetermined value which is to be compared to the offset value in order to determine the set values based on the orientation of the pattern elements (as defined by the direction vector 120 or the step vector 110 so that the predetermined value may be set to be the diagonal pixel size, as it will be further explained below) or the type of pattern element to be expected (e.g. vehicle tracks have a width which can be neglected, whereas row crops may require that the predetermined value may be bigger than a minimum value representing an estimated crop width).

In a further embodiment, comparing the offset value of the processed pixel to a predetermined value may comprise adjusting the predetermined value based on farm and/or field data. For example, when detecting row crops, based on planting data, the method of the current disclosure may access when available crop identifiers, or seed(s) and planting date, such that an estimated crop width may be determined. Following this embodiment, and aiming to detect row crops, if the offset value is smaller than the sum of the predetermined value and the estimated crop width, the processed pixel is determined to contain a pattern element, i.e., the processed pixel comprises row crop information.

It is to be stated at this point that the use of a Fourier Transform is not limited to any specific Transform (FFT, DFT), which may be used depending on the size and characteristics on the data, offering better processing time (FFT) or precision, but for which the working principles and the resulting outputs are equivalent.

By analyzing the pixel values by applying the Fourier Transform to the subset of contiguous pixels, the pixel values of said subset are transformed into the frequency domain, wherein the original signal is decomposed in a plurality of sinusoids with an associated amplitude, phase and frequency. The output of a Fourier Transform is therefore a two-dimensional array of complex values with the indexes corresponding to frequencies and the values corresponding to amplitude and phase of the signals present in the image data. Usually, the individual complex values of the two-dimensional array can be transformed into a polar representation of the numbers in order to ease the computational effort. After a polar transformation, the amplitude of the resulting sinusoid is easily computed as the modulus *r* of the polar form of the respective complex number and the phase given by the argument of polar form. The method of the current disclosure is however not limited to a processing in the polar form and may determine said values of the amplitude, phase and frequency according to given formula when departing from the rectangle representation of the complex numbers.

In a further embodiment, the Fourier Transform outputs 2200 a two-dimensional array of complex values as explained above and the method is further configured to determine the maximal magnitude value, herewith determining the index or location of the value. The different complex values with maximal magnitude value are then designated as spectral peaks 230 in the frequency domain or complex space 200 since they represent the dominating frequencies present in the image data. Due to the properties of the Fourier Transform a sub-pixel precision is achieved. As an example of this property, it can be seen in table 1 below, due to the frequency space properties, the values for wavelength and frequency specifically for a non-limiting example of 16x16 pixels.

**Table 1**

| **Index** | **0** | **1** | **2** | **3** | **4** | **5** | **6** | **7** | **8** | **9** | **10** | **11** | **12** | **13** | **14** | **15** |
|---|---|---|---|---|---|---|---|---|---|---|---|---|---|---|---|---|
| Frequency | $- \frac{8}{16}$ | $- \frac{7}{16}$ | $- \frac{6}{16}$ | $- \frac{5}{16}$ | $- \frac{4}{16}$ | $- \frac{3}{16}$ | $- \frac{2}{16}$ | $- \frac{1}{16}$ | 0 | $\frac{1}{16}$ | $\frac{2}{16}$ | $\frac{3}{16}$ | $\frac{4}{16}$ | $\frac{5}{16}$ | $\frac{6}{16}$ | $\frac{7}{16}$ |
| Wavelength (ω) | -2 | $- 2 \frac{1}{7}$ | $- 2 \frac{2}{3}$ | $- 3 \frac{1}{5}$ | -4 | $- 5 \frac{1}{3}$ | -8 | -16 | ∞ | 16 | 8 | $5 \frac{1}{3}$ | 4 | $3 \frac{1}{5}$ | $2 \frac{2}{3}$ | $2 \frac{1}{7}$ |
| Wavelength (ω) in m at 10 m/pixel | 20 | 21,4 | 26,7 | 32 | 40 | 53 | 80 | 160 | ... | 160 | 80 | 53,3 | 40 | 32 | 26,7 | 21,4 |

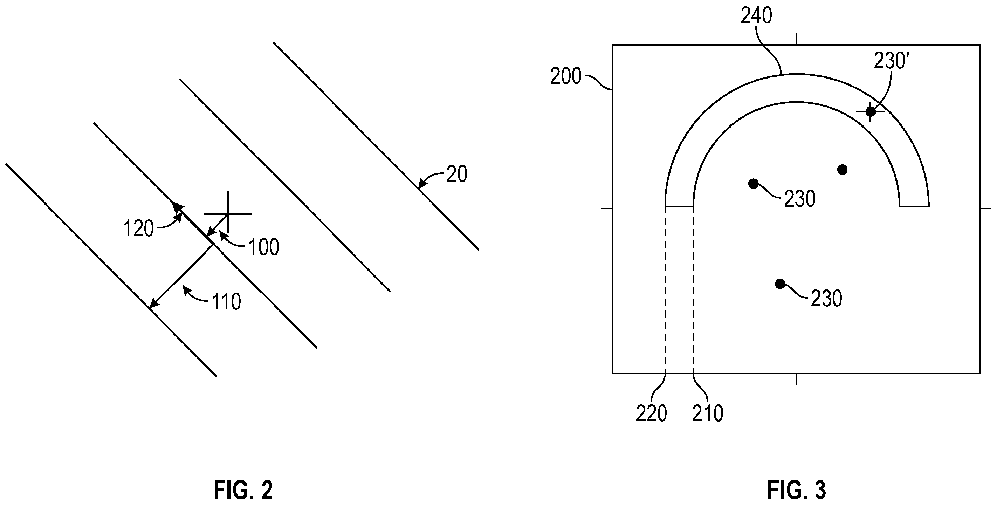

Based on the amplitude, phase and frequencies of the spectral peaks in the frequency domain, the method of the current disclosure may comprise determining a direction vector 120 indicative of the direction of the pattern elements 20, wherein the direction vector is given by the argument of the peak index regarded as complex frequency. The method may further be configured to determine a step vector 110, defined as a normal vector to the direction vector, wherein the modulus is defined by the frequency of the determined pattern. The method is further configured to determine an offset value 100, or shortest distance to the closest pattern element, based on the argument of the peak value in relation to the pattern frequency. A representation of the different magnitudes is shown in Figure 2 for a non-limiting example of a pattern as formed with straight thin lines. While the processing steps for the determination of an amplitude, phase and frequency of an spectral peak may vary depending on the chosen representation form of the complex values representing said spectral peak (e.g. in polar, cartesian, vector form, ...), the current disclosure is not intended to be limited to a single representation form. It is considered that the needed modifications for processing the Fourier Transform output belong within the common general knowledge of the skilled person in the field and therefore not needed to be further specified.

In a further embodiment of the present disclosure, the method further comprises the steps of applying 2100 a window function prior to the application of the Fourier Transform centered in each of the at least one subset of contiguous pixels in the received remote image, hereby adjusting the pixel values, wherein the window width is chosen according to a predetermined parameter. Herewith, the size of the subset of continuous pixels is adapted to provide a better detection of the patterns present in the field by choosing a suitable size for the subset of contiguous pixels to be processed.

In a further embodiment, the predetermined parameter is chosen according to the expected frequencies of the to be determined patterns or in order to avoid the presence of other expected frequencies. E.g., for detecting vehicle tracks, the window width is chosen to be preferably at least 5 times the expected distance between the vehicle tracks as retrieved from farm data; patterns arising from row crops present in the agricultural field have as well specific dimensions and the window width may be chosen to be preferably at least 5 times the inter-row distance, other patterns expected originated by means of the digital data processing may include frequencies multiple of the resolution of the image data, hereby determining as well the window width. Further, due to the requirements of Fourier Transforms, the window width is then approximated to the next bigger power of 2. By determining a suitable parameter based on the expected frequency of the emerging patterns, it is ensured that the phenomena is repeatedly present in the at least one subset of contiguous pixels while limiting the computational effort of the Fourier Transform.

In a further embodiment, the window function is one of a Hamming, Hann, Hamming and Hann, a Blackman, Blackman-Harris, Kaiser-Bessel, Poisson, Gaussian or a Flat Top Window. In a further embodiment, the window function is chosen from at least one of the following 2-D windows: a rectangular window, a Bartlett window, Kaiser Window.

In a further embodiment, the window function is chosen such that it is separable and isotropic. In a preferred embodiment, the window function is a Gaussian Window.

In a further embodiment, once the window function has been applied, the method further comprises subtracting an average of the pixel values within the at least one subset of contiguous pixels to each pixel value. Subtracting the average to the pixel values removes DC bias which would otherwise be accumulated in the complex plane around frequency zero, herewith improving the below discussed peak detection.

**In** a further embodiment, the method further comprises applying 2300 a mask 240 to the Fourier Transform output data. Hereby, and since the output of the Fourier Transform is in the frequency domain, the mask is configured to remove peaks 230 outside a predetermined frequency range, which can be inferred by the value or peaks index or location in the complex plane since the index represents a respective location in the complex plane, from which the frequency of the represented signal can be derived. A representation of such a mask is represented in Figure 3, which shows a representation of the frequency or complex space where Fourier Transform output data is represented. Peaks 230 represent the dominant frequencies present in the signal values, wherein mask 240 is configured to occlude or erase the peaks outside the semicircular sector as represented by the mask 240. Amongst the peaks 230, peak 230' is comprised within the expected maximum 220 and minimum 210 expected frequency of the patterns present in the agricultural field. Based on the expected maximum 220 and minimum 210 expected frequencies, a predetermined frequency range can be determined to filter out specific frequencies and reduce the search space to specific frequency ranges which can be determined based on farm data, user provided data and be modified to reduce the computational effort.

**In** a further embodiment, the predetermined frequency range is selected based on farm data. When looking for specific patterns on an agricultural field as can be generated by irrigation lines, row crops, machine works or human interaction, the expected frequency ranges can be determined based on farm data, hereby reducing the computational effort. For example, in the previous embodiment when the patterns are vehicle tracks, the method may receive data regarding to the vehicle track distance from the used machinery span data available.

**In** a further embodiment, the method is further configured to determine the peak location by interpolating 2400 the values of the contiguous pixels by index or pixel location in the spectral plane. **In** a further advantageous embodiment, when the window function is a Gaussian window, the values are interpolated by means of a parabola (in dB scale). The general formula for a parabola may be written as $y \left(x\right) = a {\left(x-p\right)}^{2} + b$

Wherein p would represent the exact location of the peak, and b represents the peak amplitude at the maximum value. Considering the peak being represented by the complex value with maximal magnitude value, it would be defined as element *x_{i,j}* in the two-dimensional array. For each index *i* and *j*, the parabola shall interpolate the three contiguous values in both directions, i.e. *x*_{*i-*1}*_{,j}, x_{i,j}, x*_{*i+*1*,j*} on one side and *x*_{*i,j-*1}*, x_{i,j}, x*_{*i,j+*1} such that the 3 respective values are interpolated by a parabola as expressed above. In that sense, for each set, if we consider *x*_{*i-*1}*_{,j} = α, x_{i,j} = β, x*_{*i+*1}*_{,j} = γ*, *p* and *b* can be determined as follows: $p = \frac{1}{2} \frac{α - γ}{α - 2 β + γ}$ $y \left(p\right) = b = β - \frac{1}{4} \left(α-γ\right) p$

By interpolating the peak location in the c frequency plane, an increased sub-pixel detection precision is obtained, which means that the current method allows the use of coarser resolution image data which are less computational expensive, to treat by image processing methods, reducing herewith the computational effort of the current method for the detection step as outlined above as long as the requirements of the Nyquist-Shannon sampling theorem are fulfilled. This advantage will be made clear below.

In a further embodiment, detecting patterns in agricultural field may comprise detecting vehicle tracks of agricultural machines. In this embodiment, efficiency can be increased by receiving farm data regarding the type and model of agricultural machine employed in the agricultural field. Receiving this data may be carried out by means of a communication unit communicatively connected with an agricultural intelligent system having said data stored or may be as well input by a user by means of dedicated input/output units. Based on the agricultural machine data, the first predetermined parameter may be chosen to be a predetermined multiple of the machine width. In this embodiment, the offset value of a pixel as defined above would represent the distance of the pixel to the closest vehicle track, the above introduced offset value ranges between 0 to half of the step vector module defining the vehicle track frequency in the image. Based on the value of said offset, the pixel will be classified to be pertaining to a vehicle track or not. In this embodiment, when the patterns detected are vehicle tracks, the method may further comprise guiding users/farmers at the agricultural field through these vehicle tracks. Usually, tracks left by agricultural machinery are more compact than the average field soil and therefore more convenient to walk or drive on. However, this information is not only of advantage to farmers. Further uses amongst outdoor guiding and navigation applications are envisaged. Although on private lands, agricultural fields are frequently crossed by the users of these applications in their activities (hiking, riding, driving...), and the inclusion of these tracks within the recommended routes will improve the quality and reliability of the itinerary while avoiding that these users walk on other areas of the field where they could damage the crops.

In a further embodiment, when detecting vehicle tracks of agricultural machinery, the method may further comprise using the gained information for correcting application maps of agricultural practices. For example, spreaders will register the amount of fertilizer spread over a specific part of the field, associated to a GPS location. However, as discussed above, GPS accuracy can amount to several meters, here reducing the accuracy of the application maps. As such, the actual amount of product spread over the field at a specific location as indicated by the GPS location might not correspond to the location where it was actually spread on. Hence, in the current embodiment, the method may further comprise receiving GPS data related to the application map from the agricultural machinery. Based on the detected vehicle track position, the method further comprises determining if a discrepancy between the GPS data and the track position occurs, such that the associated position of the application map is corrected when the discrepancy is above a predetermined threshold.

In a further embodiment, detecting patterns in agricultural field may comprise detecting patterns generated by row crops. Due to the periodic occurrence of row crops and depending on the resolution of the received image data, different patterns can arise due to the presence of pixels with mixed information wherein a row crop, soil and/or vehicle tracks are present. Being able to classify the pixels as row crop and or soil improves the determination of agronomic properties such that the crop characteristics are not mixed with soil characteristics and viceversa.

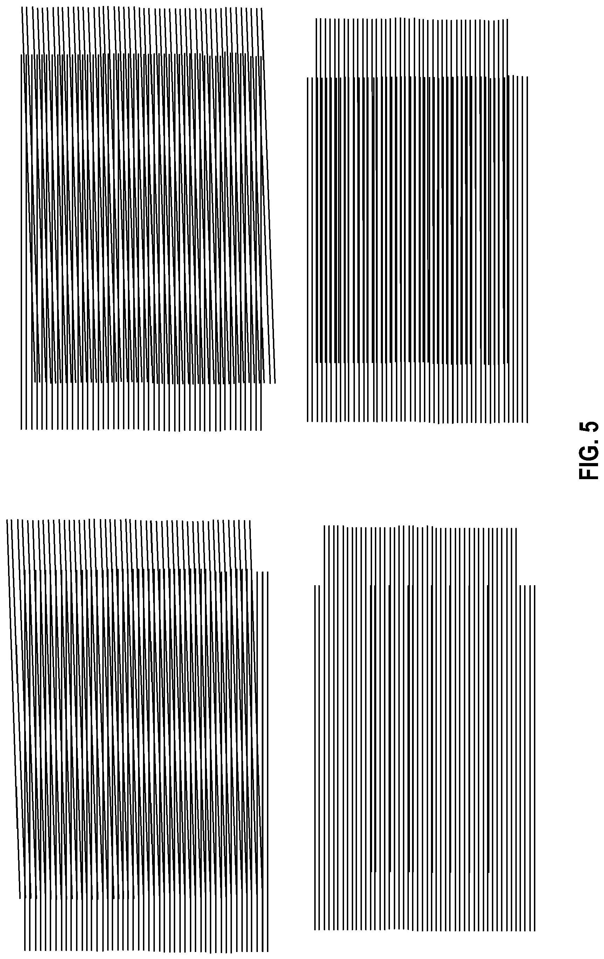

Depending on the remote image data resolution and the frequency of the pattern to be detected, further artifacts can arise which pose a challenge for both the determination of the actual patterns. One clear case would be the creation of artifacts due to aliasing and Moiré effects. This effect is caused when a pattern is superposed with another pattern of similar characteristics. This can happen due to the superposition of two similarly spaced or inclined patterns in digital imagery, but may as well happen in digital imagery when a specific pattern is closely related to the frequency of the scanning arrangement, which may be seen as an artificially created "pattern" by the optical sensing devices. Moreover, based on the inclination of one pattern with respect to each other, different patterns can arise. For these patterns to appear, the two patterns need not be completely identical, wherein at least one of them is displaced, rotated or have slightly different pitch or frequency. Hence, based on an existing and visible pattern on a field, the observed pattern as determined by the remote imagery may actually be a different pattern, wherein the original pattern is distorted. Examples of these patterns are to be seen in Figure 5, wherein based on slight shifts of the offset or inclination angle of one pattern with respect to the other, different patterns arise.

In a further embodiment, the method of the current disclosure may comprise determining a Moiré pattern correction based on the detected pattern for the pixel containing pattern elements. As above, a further compensation can be carried out based on at least one of the relationships between the detected pattern frequency and the remote image data resolution, the detected pattern direction and the remote image orientation. The remote image orientation, and the corresponding pixel(s) orientation may be received with the remote image data and determined directly from the remote image data or determined with respect to a reference orientation In an embodiment, wherein the detected pattern and the orientation of the remote image data is parallel, but might have different periods being P1 the period of the detected pattern and P2 the period of the scanning arrangement, the formula for the period Pm of the superposition image generated can be determined as ${P}_{m} = \frac{{P}_{1} ⋅ {P}_{2}}{{P}_{2} - {P}_{1}}$

In an embodiment, wherein the detected pattern and the orientation of the remote image data is not parallel, and the detected pattern forms a predefined angle α₁ with a reference orientation, e.g. east-west orientation or with respect to the field boundaries, and the orientation of the remote image data forms a predefined angle α₂ with respect to the same reference orientation, a further level of complexity is required in order to compensate for the orientation, but the inclination of the Moiré lines can be determined as $tan {α}_{m} = \frac{{P}_{1} ⋅ tan {α}_{2} - {P}_{2} ⋅ tan {α}_{1}}{{P}_{2} - {P}_{1}} ,$

And equivalently, by means of further trigonometric operations and equivalents, the period for the resulting Moiré pattern can be determined as ${P}_{m} = \frac{{P}_{1} ⋅ {P}_{2}}{\sqrt{{P}_{1}^{2} + {P}_{2}^{2} - 2 ⋅ {P}_{1} ⋅ {P}_{2} ⋅ cos \left({α}_{2}-{α}_{1}\right)}} .$

The above present equations have the specific case in which *α*₁ = *α*₂, in which case the resulting angle of the Moiré pattern is ${α}_{m} = 90 ° + \frac{{α}_{1} + {α}_{2}}{2}$

Based on the established relationships between the detected pattern and the observations, a further correction can be determined in which the detected pattern is adjusted to by correcting the pattern characteristics such that the resulting Moiré pattern is compensated and the truly present pattern in the fields can be accounted for and the corresponding generated vegetation indexes corrected in view of the detected patterns.

In a further advantageous embodiment of the current disclosure, once the remote image orientation has been determined and forms a predefined angle α₂ with a reference orientation and with it the pixel orientation can be determined, comparing the offset value of the processed pixel to a predetermined value may comprise adjusting the predetermined value based on the orientation of the processed pixel and at least one of the direction vector and the step vector. While in a general approach the predetermined value may be determined based on the pixel size and the pattern frequency such that it is guaranteed that no pattern element and/or no information propagated by the discretization may be contained in the processed pixel by choosing the predetermined value to be slightly bigger than the pixel size, in a further embodiment, the pattern orientation may be taken into consideration to increase the precision. Following this embodiment, adjusting the predetermined value based on the pixel orientation and at least one of the direction vector and the step vector comprises determining an angle between the pixel orientation and the direction vector (or alternatively the step vector) and adjusting the predetermined value based on the determined angle between the pixel orientation and the direction vector.

In a further embodiment, the method of the current disclosure may comprise using the information derived from the detected patterns for adjusting values of individual wavelength bands, or adjusting directly the to-be-used vegetation indexes or coefficients indicative of a crop and/or soil status for the determination of agronomic properties (e.g. soil or crop health, soil moisture, crop nutrient status and any other property derivable from the use of vegetation indexes). Even at coarser resolutions in which the patterns might not be at all perceivable, the pixel containing the pattern may have a biased value towards the reflectance or emittance of the specific pattern in the respective one or more wavelengths of the received remote image, such that a compensation is meaningful as well at different resolutions than the used for the detection step.

In a further embodiment, the method of the current disclosure may comprise adjusting the pixel values for the pixels containing a pattern element. Following this embodiment, the individual wavelength bands can be directly corrected.

In a further embodiment, the method of the current disclosure may comprise determining 5000 a soil or crop status value of the agricultural field. In this embodiment, receiving remote image data of an agricultural field further comprises the pixel values being representative of the reflectance or emittance of a plurality of wavelengths, wherein the method further comprises determining a vegetation index based on the pixel values of the plurality of wavelengths to determine 5000 the corresponding soil or crop status value of the agricultural field. While the original detection steps can be carried out on a single wavelength, usual agronomic information is derived by the combination of different wavelengths for specific agronomic status determination, following the definition of the respective vegetation index or coefficient used (NDVI, SAVI, ...) and therefore the method of the current disclosure specifically refers to remote image data comprising a plurality of pixel values of a plurality of wavelengths.

While the step of receiving remote image data 1000 as used in the detection step as outlined above may be referred to a single wavelength, it might contain remote image data from several wavelengths as well since the processing of remote image data containing several wavelengths or even a broadband spectrum can be considered. Moreover, the above outlined detection step may be carried out on pixel values comprising a plurality or a combination of wavelengths, for example in the form of a determined vegetation index which can be subsequently directly corrected after the detection step. However, in the case that the detection step is carried out on a single wavelength, in order to determine a vegetation index, the method of the current disclosure further comprises receiving remote image data of a plurality of wavelengths, as required for the determination of a specific vegetation index.

As a general remark, it is to be understood within the current disclosure that the remote image data received is representative of the agricultural field and has been adapted such that each pixel has a specific location which refers to the same location in the field, hereby guaranteeing that the generated mask determining the pixels containing pattern elements can be further used for every set of remote image data of the agricultural field received in the plurality of wavelengths for adjusting the values of the determined vegetation index.

The method of the current embodiment therefore comprises determining such a vegetation index based on the pixel values of the plurality of wavelengths and adjusting either the single wavelengths or directly the vegetation index for the pixels comprising a pattern element.

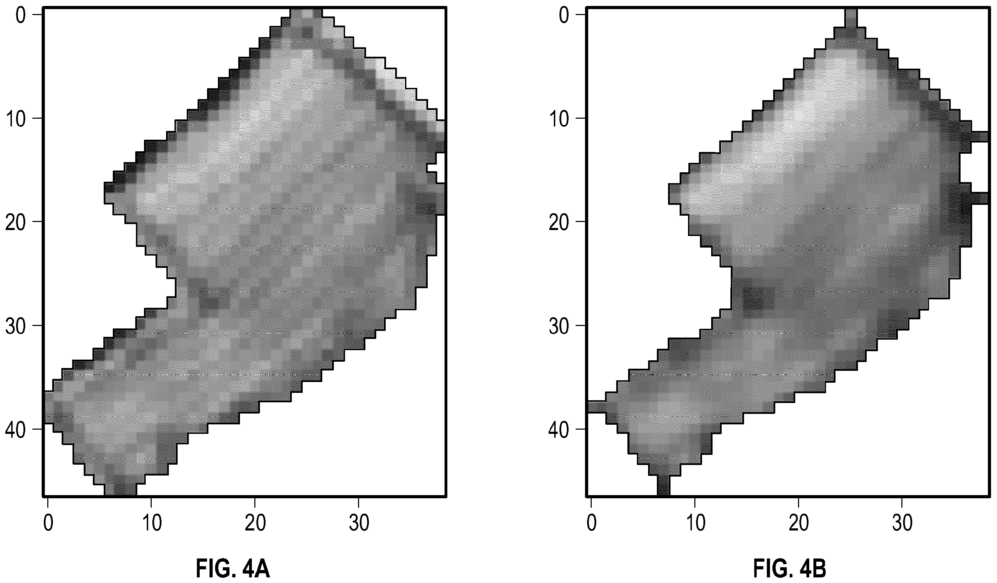

The result of such an adjustment step can be seen in Figures 4a and 4b. Figure 4a shows vegetation index values across an agricultural field. As it can be seen in Figure 4a, different patterns occur which do not represent the real agronomic state of the crop in the field. In Figure 4b, the patterns have been removed while the different variations due to the in-field variability of the crop is maintained.

In a further embodiment, the adjustment step, whether for the vegetation index or for the pixel values of the single wavelengths, adjusting the vegetation index or the pixel values comprises determining a correction value based on the respective vegetation index or, respectively, the pixel values of neighboring pixels to pixels comprising a pattern element and determining an adjusted vegetation index or, respectively, the pixel values based on the correction value.

Depending on the resolution of the image used, neighboring pixels may refer to directly adjacent pixels or pixels which are within a specific distance from the pixel comprising a pattern element. Depending on the expected frequency of the pattern and the resolution of the image, it can be adapted to better determine the correction.

In a further embodiment, adjusting the vegetation index comprises determining a correction value based on the respective vegetation index of neighboring pixels may comprises excluding neighboring pixels which comprise a pattern element.

In a further embodiment, adjusting the pixel values of the single wavelength bands comprises determining a correction value based on the pixel values of the single wavelength bands of neighboring pixels may comprises excluding neighboring pixels which comprise a pattern element.

Following this embodiment, pixels containing patterns are excluded from the adjustment procedure, herewith reducing the propagation of pattern induced interferences.

In a further embodiment, adjusting the vegetation index or single wavelength values is carried out by means of interpolation of the neighboring pixels. In a further embodiment, the interpolation method is at least one of the following methods: mean, median and/or weighted interpolation.

In a further embodiment, the method further comprises refining the received remote image data to a predefined resolution. As outlined above, due to the sub-pixel precision of the method of the current disclosure, the resolution of the received remote image data is not limiting for the precision which can be achieved for adjusting the pixel values or the vegetation index. Hence, adjusting the vegetation index, or the at least one of the plurality of the wavelengths, may further comprise refining the remote image data up to a predefined resolution. By refining the resolution of an image it is understood to increase the number of pixels within an image, such that each pixel is of smaller size. Different existing methods for refinement of image data by reducing the pixel size exist in the prior art and will not be further discussed here. Hence, from a single pixel, upon refinement four equally big pixels of a quarter of the size can be generated, wherein the value of the newly generated pixels can be set to correspond to the value of the original coarser pixel or be determined based on interpolation procedures based on the values of the original coarser pixel and neighboring pixels in order to avoid granularity and achieve a smoother function evolution. For the above refinement step, increasing the number of pixels can be understood to be carried out throughout the whole extent of the remote image data over the agricultural field, however the method of the current disclosure comprises as well piece-wise refinement of the remote image data, wherein, e.g., only the areas neighboring a pixel comprising a pattern element can be refined. Moreover, the refining step might comprise carrying out and adaptive refinement of the grid such that the computational effort is kept limited.

The method of the current embodiment further comprises determining an offset value for the refined pixels, such that the offset value reflects the new distance from the center of the newly generated pixels to the nearest pattern element.

Correspondingly, based on the predefined resolution, a refined mask function is generated such that the set values of the refined mask function correspond to each of the newly generated refined pixels, wherein the set values are based on the offset value of the refined pixels. Hence, based on the refined mask functions, the vegetation index can be refined at those pixels designated by the refined mask function, hereby achieving a higher resolution for the adjustment of the vegetation index than the original resolution of the received image data for the detection step, hereby reducing the computational effort which would be needed to process the remote data at a higher resolution for the detection step.

In a further embodiment, adjusting the vegetation index may be carried out directly at the original resolution of the received remote image data. In a further embodiment, adjusting the vegetation index comprises adjusting the vegetation directly at the predefined resolution directly. In a further embodiment, a two-step correction method is followed in which adjusting the vegetation index is carried out at the original resolution of the further remote image data, generating adjusted vegetation index values at the original resolution and in a second step by means of refining the resolution a further finer adjustment of the vegetation index can be carried out. Analogously, same adjustment can be carried out alternatively for the pixel values of the individual wavelength bands.

In a further embodiment, the method of the current disclosure further comprises determining an agricultural practice based on the determined soil or crop status value. The method of the current disclosure comprises, based on the agricultural practice to be determined, generating a script which can be automatically transmitted by means of the communication unit or output via the output means for the users to manually upload it to the respective machinery in charge of carrying out the agricultural practice. For example, for the application of fertilizer, it is usual to generate application maps which can be then read by the spreader or fertilizer application device. These application maps can be either transmitted by means of dedicated networks or uploaded into the spreader by means of an external memory device. However, the methods of the current disclosure are not limited to any specific data or communication format.

In a further embodiment, determining an agricultural practice may comprise one of applying a fertilizer or fertigation product, a crop protection product or irrigation.

The terminology used herein is for the purpose of describing particular example embodiments only and is not intended to be limiting. As used herein, the singular forms "a", "an" and "the" may be intended to include the plural forms as well, unless the context clearly indicates otherwise.

The terms "comprises," "comprising,", "including," and "having," are inclusive and therefore specify the presence of stated features, integers, steps, operations, elements, or components, but do not preclude the presence or addition of one or more other features, integers, steps, operations, elements, components, or groups thereof. The method steps, processes, and operations described herein are not to be construed as necessarily requiring their performance in the particular order discussed or illustrated, unless specifically identified as an order of performance. It is also to be understood that additional or alternative steps may be employed.

The use of the expression "at least" or "at least one" suggests the use of one or more elements, as the use may be in one of the embodiments to achieve one or more of the desired objects or results.

The process steps, method steps, algorithms or the like may be described **in** a sequential order, such processes, methods and algorithms may be configured to work in alternate orders. **In** other words, any sequence or order of steps that may be described does not necessarily indicate a requirement that the steps be performed in that order. The steps of processes described herein may be performed in any order practical. Further, some steps may be performed simultaneously, in parallel, or concurrently. Various methods described herein may be practiced by combining one or more machine-readable storage media containing the code according to the present disclosure with appropriate standard computer hardware to execute the code contained therein. An apparatus for practicing various embodiments of the present disclosure may involve one or more computers (or one or more processors within a single computer) and storage systems containing or having network access to computer program(s) coded in accordance with various methods described herein, and the method steps of the disclosure could be accomplished by modules, routines, subroutines, or subparts of a computer program product. The scope of the disclosure is determined by the claims that follow.

## Claims

1. A computer-implemented method for detecting patterns in agricultural fields, wherein the patterns comprise pattern elements, which are repeated periodically in one direction and gaps between the pattern elements which define a pattern geometry, the method comprising:
- receiving remote image data of an agricultural field comprising a plurality of pixels, wherein each pixel comprises at least one pixel value, wherein the at least one pixel value is representative of the reflectance or emittance of at least one wavelength band;
- processing the pixel values for at least a subset of contiguous pixels in the received remote image data, wherein processing the pixel value for at least a subset of contiguous pixels comprises:
- applying a Fourier Transform to the pixel values of the subset of contiguous pixels;
- processing the Fourier Transform output data to determine an offset value, wherein the offset value represents the distance of the center of a pixel to a nearest pattern element,
the method further comprising:
- generating a mask function, wherein the mask function comprises set values for the processed pixels, wherein the set values are determined based on the offset value of the processed pixels;
- determining the pixels containing pattern elements based on the mask function.

2. A method according to claim 1, wherein the Fourier Transform outputs a two-dimensional array of complex values, and wherein the method further comprises:
- determining the index of the maximal magnitude values of the two-dimensional array and designating the complex values with maximal magnitude value as spectral peaks in the frequency domain;
- based on the amplitude, phase and frequencies of the spectral peaks in the frequency domain, determining a direction vector indicative of the direction of the pattern elements, wherein the direction vector is given by the argument of the peak index regarded as complex frequency;
- determining a step vector, defined as a normal vector to the direction vector, wherein the modulus is defined by the frequency of the determined pattern;
- determining the offset value based on the argument of the peak value in relation to the pattern frequency.

3. A method according to claim 1 or 2, wherein processing the pixel value for the at least a subset of contiguous pixels in the received remote image data further comprises:
- applying a window function prior to the application of the Fourier Transform centered in the at least a subset of contiguous pixels in the received remote image data, hereby adjusting the pixel values;
- wherein the window width of the window function is chosen according to a predetermined parameter.

4. A method according to claim 3 when depending on claim 2, wherein the window function is a Gaussian Window, and wherein the method further comprises:
- interpolating the complex values of the two-dimensional array adjacent to the maximal magnitude value of the two-dimensional array of elements with a parabolic function, and
- determining the maximum value of the interpolating parabolic function;
- wherein the offset value is adjusted based on the maximum value of the interpolating parabolic function.

5. A method according to claim 2 or 4, or according to claim 3 when depending on claim 2, wherein processing the Fourier Transform outputs further comprises applying a mask to the Fourier Transform output data, wherein the mask is configured to remove the complex values outside a predetermined frequency range.

6. A method according to any of the claims 1 to 5, wherein the method further comprises adjusting the pixel values for the pixels containing a pattern element.

7. A method according to any of claims 1 to 5, wherein receiving remote image data of an agricultural field further comprises the pixel values being representative of the reflectance or emittance of a plurality of wavelengths, wherein the method further comprises:
- determining a vegetation index based on the pixel values of the plurality of wavelengths;
- adjusting the vegetation index for the pixels containing a pattern element;
- determining a soil or crop status value of the agricultural field based on the adjusted vegetation index.

8. A method according to claim 7, wherein adjusting the vegetation index comprises determining a correction value based on the respective vegetation index of neighboring pixels to pixels comprising a pattern element and determining an adjusted vegetation index based on the correction value.

9. A method according to claim 8, wherein determining a correction value based on the respective vegetation index of neighboring pixels to pixels comprising a pattern element further comprises excluding neighboring pixels comprising a pattern element.

10. A method according to any one of claims 7 to 9, further comprising:
- refining the received remote image data to a predefined resolution, wherein the predefined resolution is finer than the original resolution of the received remote image data and the pixel values of the refined remote image data are determined based on the values of the coarser pixels of the remote image data;
- determining the offset value for the refined pixels of the remote image data;
wherein the mask function is a refined mask function generated based on said predefined resolution, wherein the set values of the refined mask function are determined based on the offset value of the refined pixels of the remote image data;
- wherein the refined pixels of the remote image data comprising a pattern element are determined based on the refined mask function;
- wherein the vegetation index is adjusted for the refined pixels of the remote image data comprising a pattern element.

11. A method according to claim 10, wherein adjusting the vegetation index comprises at least one of: adjusting the vegetation index at the original resolution of the received further image data; adjusting the vegetation index at the predefined resolution; and adjusting the vegetation index at the original resolution and at the predefined resolution.

12. A method according to anyone of claims 7 to 11, wherein the method comprises determining an agricultural practice based on the determined soil or crop status value and the agricultural practice is at least one of: applying a fertilizer, applying a fertigation product, applying a pesticide product, and irrigation.

13. A method according to any of the claims 1 to 12, wherein detecting patterns comprises at least one of detecting vehicle tracks of agricultural machines and detecting row crops.

14. A data processing apparatus comprising means for carrying out the method of any one of the claims 1 to 13.

15. A computer-readable storage medium comprising instructions which, when executed by a computer system, cause the computer to carry out the method of any one of the claims 1 to 13.

16. A computer program product comprising instructions which, when the program is executed by a computer system, cause the computer to carry out the method of any one of the claims 1 to 13.

## Patentansprüche

1. Computerimplementiertes Verfahren zum Erkennen von Mustern in landwirtschaftlichen Feldern, wobei die Muster Musterelemente, die sich periodisch in einer Richtung wiederholen, und Zwischenräume zwischen den Musterelementen, die eine Mustergeometrie definieren, umfassen, wobei das Verfahren Folgendes umfasst:
- Empfangen von Fernbilddaten eines landwirtschaftlichen Feldes, die eine Mehrzahl von Pixeln umfassen, wobei jedes Pixel wenigstens einen Pixelwert umfasst, wobei der wenigstens eine Pixelwert für den Reflexionsgrad oder die Emittanz wenigstens eines Wellenlängenbandes repräsentativ ist;
- Verarbeiten der Pixelwerte für wenigstens eine Teilmenge aneinandergrenzender Pixel in den empfangenen Fernbilddaten, wobei das Verarbeiten des Pixelwertes für wenigstens eine Teilmenge aneinandergrenzender Pixel Folgendes umfasst:
- Anwenden einer Fouriertransformation auf die Pixelwerte der Teilmenge aneinandergrenzender Pixel;
- Verarbeiten der Ausgabedaten der Fouriertransformation, um einen Versatzwert zu bestimmen, wobei der Versatzwert den Abstand der Mitte eines Pixels zu einem nächstgelegenen Musterelement darstellt,
wobei das Verfahren ferner Folgendes umfasst:
- Generieren einer Maskenfunktion, wobei die Maskenfunktion festgelegte Werte für die verarbeiteten Pixel umfasst, wobei die festgelegten Werte basierend auf dem Versatzwert der verarbeiteten Pixel bestimmt werden;
- Bestimmen der Pixel, die Musterelemente enthalten, basierend auf der Maskenfunktion.

2. Verfahren nach Anspruch 1, wobei die Fouriertransformation eine zweidimensionale Anordnung komplexer Werte ausgibt und wobei das Verfahren ferner Folgendes umfasst:
- Bestimmen des Index der Maximalgrößenwerte der zweidimensionalen Anordnung und Bezeichnen der komplexen Werte mit Maximalgrößenwert als spektrale Spitzen im Frequenzbereich;
- basierend auf der Amplitude, Phase und den Frequenzen der spektralen Spitzen im Frequenzbereich, Bestimmen eines Richtungsvektors, der die Richtung der Musterelemente angibt, wobei der Richtungsvektor durch das Argument des Spitzenindex, betrachtet als komplexe Frequenz, gegeben ist;
- Bestimmen eines Stufenvektors, der als ein Normalenvektor zu dem Richtungsvektor definiert ist, wobei der Modul durch die Frequenz des bestimmten Musters definiert ist;
- Bestimmen des Versatzwertes basierend auf dem Argument des Spitzenwertes in Bezug zu der Musterfrequenz.

3. Verfahren nach Anspruch 1 oder 2, wobei das Verarbeiten des Pixelwertes für die wenigstens eine Teilmenge aneinandergrenzender Pixel in den empfangenen Fernbilddaten ferner Folgendes umfasst:
- Anwenden einer Fensterfunktion vor der Anwendung der Fouriertransformation, und zwar zentriert in der wenigstens einen Teilmenge aneinandergrenzender Pixel in den empfangenen Fernbilddaten, und dadurch Anpassen der Pixelwerte;
- wobei die Fensterbreite der Fensterfunktion gemäß einem vorgegebenen Parameter gewählt wird.

4. Verfahren nach Anspruch 3, wenn abhängig von Anspruch 2, wobei die Fensterfunktion ein Gauß-Fenster ist und wobei das Verfahren ferner Folgendes umfasst:
- Interpolieren der komplexen Werte der zweidimensionalen Anordnung, die dem Maximalgrößenwert der zweidimensionalen Anordnung von Elementen benachbart sind, mit einer parabolischen Funktion und
- Bestimmen des Maximalwertes der interpolierenden parabolischen Funktion;
- wobei der Versatzwert basierend auf dem Maximalwert der interpolierenden parabolischen Funktion angepasst wird.

5. Verfahren nach Anspruch 2 oder 4, oder nach Anspruch 3, wenn abhängig von Anspruch 2, wobei das Verarbeiten der Ausgaben der Fouriertransformation ferner das Anwenden einer Maske auf die Ausgabedaten der Fouriertransformation umfasst, wobei die Maske dazu ausgestaltet ist, die komplexen Werte außerhalb eines vorgegebenen Frequenzbereichs zu entfernen.

6. Verfahren nach einem der Ansprüche 1 bis 5, wobei das Verfahren ferner das Anpassen der Pixelwerte für die Pixel, die ein Musterelement enthalten, umfasst.

7. Verfahren nach einem der Ansprüche 1 bis 5, wobei das Empfangen von Fernbilddaten eines landwirtschaftlichen Feldes ferner die Pixelwerte umfasst, die für den Reflexionsgrad oder die Emittanz einer Mehrzahl von Wellenlängen repräsentativ sind, wobei das Verfahren ferner Folgendes umfasst:
- Bestimmen eines Vegetationsindex basierend auf den Pixelwerten der Mehrzahl von Wellenlängen;
- Anpassen des Vegetationsindex für die Pixel, die ein Musterelement enthalten;
- Bestimmen eines Boden- oder Nutzpflanzenstatuswertes des landwirtschaftlichen Feldes basierend auf dem angepassten Vegetationsindex.

8. Verfahren nach Anspruch 7, wobei das Anpassen des Vegetationswertes das Bestimmen eines Korrekturwertes basierend auf dem jeweiligen Vegetationsindex von Pixeln, die Pixeln, die ein Musterelement umfassen, benachbart sind, und das Bestimmen eines angepassten Vegetationsindex basierend auf dem Korrekturwert umfasst.

9. Verfahren nach Anspruch 8, wobei das Bestimmen eines Korrekturwertes basierend auf dem jeweiligen Vegetationsindex von Pixeln, die Pixeln, die ein Musterelement umfassen, benachbart sind, ferner das Ausschließen von benachbarten Pixeln, die ein Musterelement umfassen, umfasst.

10. Verfahren nach einem der Ansprüche 7 bis 9, ferner umfassend:
- Verfeinern der empfangenen Fernbilddaten bis zu einer vordefinierten Auflösung, wobei die vordefinierte Auflösung feiner als die ursprüngliche Auflösung der empfangenen Fernbilddaten ist und die Pixelwerte der verfeinerten Fernbilddaten basierend auf den Werten der gröberen Pixel der Fernbilddaten bestimmt werden;
- Bestimmen des Versatzwertes für die verfeinerten Pixel der Fernbilddaten;
wobei die Maskenfunktion eine verfeinerte Maskenfunktion ist, die basierend auf der vordefinierten Auflösung erzeugt wird, wobei die festgelegten Werte der verfeinerten Maskenfunktion basierend auf dem Versatzwert der verfeinerten Pixel der Fernbilddaten bestimmt werden;
- wobei die verfeinerten Pixel der Fernbilddaten, die ein Musterelement umfassen, basierend auf der verfeinerten Maskenfunktion bestimmt werden;
- wobei der Vegetationsindex für die verfeinerten Pixel der Fernbilddaten, die ein Musterelement umfassen, angepasst wird.

11. Verfahren nach Anspruch 10, wobei das Anpassen des Vegetationsindex wenigstens eines der Folgenden umfasst: Anpassen des Vegetationsindex bei der ursprünglichen Auflösung der empfangenen weiteren Bilddaten; Anpassen des Vegetationsindex bei der vordefinierten Auflösung; und Anpassen des Vegetationsindex bei der ursprünglichen Auflösung und bei der vordefinierten Auflösung.

12. Verfahren nach einem der Ansprüche 7 bis 11, wobei das Verfahren das Bestimmen einer landwirtschaftlichen Praktik basierend auf dem bestimmten Boden- oder Nutzpflanzenstatuswert umfasst und die landwirtschaftliche Praktik wenigstens eines der Folgenden ist: Anwenden eines Düngemittels, Anwenden eines Fertigationsprodukts, Anwenden eines Pestizidprodukts und Bewässerung.

13. Verfahren nach einem der Ansprüche 1 bis 12, wobei das Erkennen von Mustern wenigstens eines aus dem Erkennen von Fahrzeugspuren landwirtschaftlicher Maschinen und dem Erkennen von Nutzpflanzenreihen umfasst.

14. Datenverarbeitungsvorrichtung, die Mittel zum Durchführen des Verfahrens nach einem der Ansprüche 1 bis 13 umfasst.

15. Computerlesbares Speichermedium, das Anweisungen umfasst, die, wenn sie durch ein Computersystem ausgeführt werden, bewirken, dass der Computer das Verfahren nach einem der Ansprüche 1 bis 13 durchführt.

16. Computerprogrammprodukt, das Anweisungen umfasst, die, wenn das Programm durch ein Computersystem ausgeführt wird, bewirken, dass der Computer das Verfahren nach einem der Ansprüche 1 bis 13 durchführt.

## Revendications

1. Procédé mis en œuvre par ordinateur pour détecter des motifs dans des champs agricoles, dans lequel les motifs comprennent des éléments de motif qui se répètent périodiquement dans une direction et des espaces entre les éléments de motif qui définissent une géométrie de motif, le procédé comprenant :
- la réception de données d'image à distance d'un champ agricole comprenant une pluralité de pixels, dans lequel chaque pixel comprend au moins une valeur de pixel, dans lequel la au moins une valeur de pixel est représentative de la réflectance ou de l'émissivité d'au moins une bande de longueurs d'onde ;
- le traitement des valeurs de pixels pour au moins un sous-ensemble de pixels contigus dans les données d'image à distance reçues,
dans lequel le traitement de la valeur de pixel pour au moins un sous-ensemble de pixels contigus comprend :
- l'application d'une transformée de Fourier aux valeurs de pixels du sous-ensemble de pixels contigus ;
- le traitement des données de sortie de la transformée de Fourier pour déterminer une valeur de décalage, dans lequel la valeur de décalage représente la distance entre le centre d'un pixel et un élément de motif le plus proche, le procédé comprenant en outre :
- la génération d'une fonction de masque,
dans lequel la fonction de masque comprend des valeurs définies pour les pixels traités,
dans lequel les valeurs définies sont déterminées sur la base de la valeur de décalage des pixels traités ;
- la détermination des pixels contenant des éléments de motif sur la base de la fonction de masque.

2. Procédé selon la revendication 1, dans lequel la transformée de Fourier produit un tableau bidimensionnel de valeurs complexes, et dans lequel le procédé comprend en outre :
- la détermination de l'indice des valeurs d'amplitude maximale du tableau bidimensionnel et la désignation des valeurs complexes ayant une valeur d'amplitude maximale comme des pics spectraux dans le domaine de fréquence ;
- sur la base de l'amplitude, de la phase et des fréquences des pics spectraux dans le domaine de fréquence, la détermination d'un vecteur de direction indiquant la direction des éléments de motif, dans lequel le vecteur de direction est donné par l'argument de l'indice de pic considéré comme une fréquence complexe ;
- la détermination d'un vecteur de pas, défini comme un vecteur normal au vecteur de direction, dans lequel le module est défini par la fréquence du motif déterminé ;
- la détermination de la valeur de décalage sur la base de l'argument de la valeur de pic par rapport à la fréquence du motif.

3. Procédé selon la revendication 1 ou la revendication 2, dans lequel le traitement de la valeur de pixel pour au moins un sous-ensemble de pixels contigus dans les données d'image à distance reçues comprend en outre :
- l'application d'une fonction de fenêtre avant l'application de la transformée de Fourier centrée sur l'au moins un sous-ensemble de pixels contigus dans les données d'image à distance reçues, ce qui permet d'ajuster les valeurs de pixel ;
- dans lequel la largeur de fenêtre de la fonction de fenêtre est choisie en fonction d'un paramètre prédéterminé.

4. Procédé selon la revendication 3, lorsqu'elle dépend de la revendication 2, dans lequel la fonction de fenêtre est une fenêtre gaussienne, et dans lequel le procédé comprend en outre :
- l'interpolation des valeurs complexes du tableau bidimensionnel adjacentes à la valeur de magnitude maximale du tableau bidimensionnel d'éléments à l'aide d'une fonction parabolique, et
- la détermination de la valeur maximale de la fonction parabolique d'interpolation ;
- dans lequel la valeur de décalage est ajustée sur la base de la valeur maximale de la fonction parabolique d'interpolation.

5. Procédé selon la revendication 2 ou la revendication 4, ou selon la revendication 3 lorsqu'elle dépend de la revendication 2, dans lequel le traitement des résultats de la transformée de Fourier comprend en outre l'application d'un masque aux données de sortie de la transformée de Fourier, dans lequel le masque est configuré pour supprimer les valeurs complexes situées en dehors d'une plage de fréquences prédéterminée.

6. Procédé selon l'une quelconque des revendications 1 à 5, dans lequel le procédé comprend en outre l'ajustement des valeurs de pixels pour les pixels contenant un élément de motif.

7. Procédé selon l'une quelconque des revendications 1 à 5, dans lequel la réception de données d'image à distance d'un champ agricole comprend en outre les valeurs de pixels représentatives de la réflectance ou de l'émissivité d'une pluralité de longueurs d'onde, dans lequel le procédé comprend en outre :
- la détermination d'un indice de végétation sur la base des valeurs de pixels de la pluralité de longueurs d'onde ;
- l'ajustement de l'indice de végétation pour les pixels contenant un élément de motif ;
- la détermination d'une valeur d'état du sol ou de la culture du champ agricole sur la base de l'indice de végétation ajusté.

8. Procédé selon la revendication 7, dans lequel l'ajustement de l'indice de végétation comprend la détermination d'une valeur de correction sur la base de l'indice de végétation respectif des pixels voisins des pixels comprenant un élément de motif et la détermination d'un indice de végétation ajusté sur la base de la valeur de correction.

9. Procédé selon la revendication 8, dans lequel la détermination d'une valeur de correction sur la base de l'indice de végétation respectif des pixels voisins des pixels comprenant un élément de motif comprend en outre l'exclusion des pixels voisins comprenant un élément de motif.

10. Procédé selon l'une quelconque des revendications 7 à 9, comprenant en outre :
- l'affinement des données d'image à distance reçues à une résolution prédéfinie, dans lequel la résolution prédéfinie est plus fine que la résolution d'origine des données d'image à distance reçues et les valeurs de pixels des données d'image à distance affinées sont déterminées sur la base des valeurs des pixels de résolution plus grossière des données d'image à distance ;
- la détermination de la valeur de décalage pour les pixels affinés des données d'image à distance ;
dans lequel la fonction de masque est une fonction de masque affinée générée sur la base de ladite résolution prédéfinie,
dans lequel les valeurs définies de la fonction de masque affinée sont déterminées sur la base de la valeur de décalage des pixels affinés des données d'image à distance ;
- dans lequel les pixels affinés des données d'image à distance comprenant un élément de motif sont déterminés sur la base de la fonction de masque affinée ;
- dans lequel l'indice de végétation est ajusté pour les pixels affinés des données d'image à distance comprenant un élément de motif.

11. Procédé selon la revendication 10, dans lequel l'ajustement de l'indice de végétation comprend au moins l'une des opérations suivantes :
l'ajustement de l'indice de végétation à la résolution d'origine des données d'image supplémentaires reçues ; l'ajustement de l'indice de végétation à la résolution prédéfinie ; et l'ajustement de l'indice de végétation à la résolution d'origine et à la résolution prédéfinie.

12. Procédé selon l'une quelconque des revendications 7 à 11, dans lequel le procédé comprend la détermination d'une pratique agricole sur la base de la valeur déterminée de l'état du sol ou de la culture, et la pratique agricole est au moins l'une des suivantes : l'application d'un engrais, l'application d'un produit de fertigation, l'application d'un produit pesticide et l'irrigation.

13. Procédé selon l'une quelconque des revendications 1 à 12, dans lequel la détection de motifs comprend au moins l'une des opérations suivantes : la détection des traces de passage de machines agricoles et la détection de cultures en rangs.

14. Dispositif de traitement de données comprenant des moyens pour mettre en œuvre le procédé selon l'une quelconque des revendications 1 à 13.

15. Support de stockage lisible par ordinateur comprenant des instructions qui, lorsqu'elles sont exécutées par un système informatique, amènent l'ordinateur à mettre en œuvre le procédé selon l'une quelconque des revendications 1 à 13.

16. Produit de programme informatique comprenant des instructions qui, lorsque le programme est exécuté par un système informatique, amènent l'ordinateur à mettre en œuvre le procédé selon l'une quelconque des revendications 1 à 13.
